# EUROPÄISCHE PATENTSCHRIFT

(11) **EP 1 577 169 B1**
(45) Veröffentlichungstag und Bekanntmachung des Hinweises auf die Patenterteilung: **17.01.2007**
(21) Anmeldenummer: 05005535.9
(22) Anmeldetag: 15.03.2005
(51) Int. Cl.: B60R 19/48

(54) **Sensorhalter mit Haltebügel an einem Stossfänger**
Sensor holder for a bumper, with a retaining bracket.
Support de détecteur pour pare-chocs, avec étrier de retenue

(30) Priorität: 17.03.2004 DE 102004013311
(43) Veröffentlichungstag der Anmeldung: 21.09.2005
(73) Patentinhaber: Plastal GmbH, 91781 Weissenburg (DE)
(72) Erfinder: Sandner, Norbert, 90765 Fürth (DE); Bürk, Ralf, 74243 Langenbrettach (DE)
(74) Vertreter: Scherzberg, Andreas Hans

(56) Entgegenhaltungen:
- DE-A1- 10 031 111
- DE-A1- 10 118 112
- DE-A1- 19 621 964
- US-A1- 2002 190 850

## Beschreibung

Die Erfindung betrifft einen Sensorhalter an einem Stoßfänger eines Kraftfahrzeugs zur Aufnahme von Sensoren.

Stoßfänger von Kraftfahrzeugen werden heutzutage in zunehmendem Maße dazu genutzt, Bauteile geringer Abmessungen zu tragen, bei denen die Position an einem Stoßfänger aufgrund der exponierten Lage für ihre Funktion besonders vorteilhaft ist. So ist es beispielsweise bekannt, Blinker, Begrenzungsleuchten und insbesondere Abstandssensoren (Parktronic-Sensoren, abgekürzt PTS), die den Abstand zu anderen Fahrzeugen oder Hindernissen feststellen und als Einparkhilfen gedacht sind, in die Stoßfänger von Kraftfahrzeugen einzubauen. Unter Stoßfänger ist sowohl ein einteiliger, als auch ein aus Modulen zusammengesetzter Stoßfänger zu verstehen, bei dem die Bauteile jeweils in einem Modul des Stoßfängers eingesetzt sind. Die Befestigung der Bauteile muss so erfolgen, dass bei Einwirkungen auf die Stoßfänger, insbesondere durch stoßartige Belastungen, eine Lockerung oder gar ein Herausfallen unmöglich ist.

Es ist beispielsweise bei Abstandssensoren bekannt, diese zunächst in ein Vorgehäuse einzuschieben und dort in eine Clip-Verbindung einzuclipsen, um sie dann mittels dieses Vorgehäuses in die dafür vorgesehene Aufnahme des Stoßfängers einzuclipsen. Diese Aufnahme ist beispielsweise napfförmig, wird eigens zu diesem Zweck an den Stoßfänger angespritzt oder angeklebt und enthält zum Einrasten des Vorgehäuses entsprechende Ausnehmungen in seiner Wand. Ein solcher Halter erfordert zu seiner Herstellung aufwändige Werkzeuge und aufgrund seiner Zweiteiligkeit einen erhöhten Montage- und Lageraufwand.

Die DE 101 18 112 A1 beschreibt Abstandssensoren - auch PTS (Parktronic-Sensoren) genannt -, die in einen Stoßfänger eines Kraftfahrzeuges einbaubar sind. Der Sensor wird hierbei über zwei Clipsaufnahmen in einem Sensorhalter verrastet. An den Sensoren sind Rastnasen vorhanden, die in entsprechende Ausnehmungen am Sensorhalter eingreifen. Der Sensorhalter ist am Stoßfänger befestigt.

Nachteilig ist dabei, dass der Rohstoff bzw. das Material des Sensorhalters eine entsprechende Steifigkeit aufweisen muss, um eine sichere Rastfunktion zu gewährleisten. Als Material kommt hier z.B. PC/PBT oder PP GF verstärkt in Frage.

PP oder PP/EPDM oder kompatible Materialien können nicht verwendet werden, da sie zu elastisch sind.

### Weitere Kritik am Stand der Technik:

Schwierige Montage, Sensoren sitzen durch die Verrastung meistens nicht zentrisch im Sensorhalter.

Eine Demontage bedingt durch das Material des Sensorhalters (Steifigkeit) ist schwierig (Verletzungsgefahr).

Einschränkungen in der Befestigung des Sensorhalters mit der Verkleidung bzw. dem Stoßfänger. Ultraschallschweißen meistens nicht möglich.

Außerdem sind Anforderungen vom Kunden, wie Ausdrückmöglichkeit und Ausstoßen des Sensors aus dem Sensorhalter nicht umsetzbar, da die Verrastung nicht aufzuheben ist.

Weiterhin sind aufwändige Abstimmungsarbeiten am Werkzeug für die Anpassung der Rastnasen erforderlich.

Ferner ist ein aufwändiges Werkzeug wegen der Hinterschnitte für die Verrastung erforderlich.

Dokument US 2002/0190850 A1 beschreibt einen Sensorhalter, mit einem an diesem den Sensor haltenden lösbar befestigbaren Halteelement (plate spring 40).

Der Sensor ist wegen dieses elastischen Halteelements kompliziert zu befestigen und entfernen.

Der Erfindung liegt daher die Aufgabe zu Grunde, einen Sensorhalter nach dem Oberbegriff des Anspruchs 1 so zu verbessern, dass der Sensor auf einfache Weise im Sensorhalter zu befestigen ist und auch leicht wieder entfernt werden kann.

Erfindungsgemäß wird diese Aufgabe durch die Merkmale des Anspruchs 1 gelöst.

Dadurch, dass am Sensorhalter ein klappbarer Haltebügel befestigt ist, der von einer Offenstellung, in der der Sensor in den Sensorhalter einlegbar oder herausnehmbar ist, in eine Schließstellung geklappt werden kann und in der Schließstellung den Sensor im Sensorhalter eingeklemmt, lässt sich der Sensor leicht im Sensorhalter befestigen und ebenso leicht auch wieder entfernen.

Zur Realisierung eines klappbaren Haltebügels ist in erfindungsgemäßer Ausgestaltung der Haltebügel an einem Ende über ein Filmscharnier am Sensorhalter befestigt und rastet an seinem anderen, dem Filmscharnier abgewandten Ende in seiner Schließstellung über eine Verrastung am Sensorhalter ein. Diese Verrastung ist lösbar ausgebildet, so dass sich der Sensor auch wieder ausbauen lässt.

Bevorzugt rastet der Haltebügel an seinem einen Ende zusätzlich zum Filmscharnier über eine weitere Verrastung mit dem Sensorhalter in der Schließstellung ein. Auch diese weitere Verrastung ist lösbar ausgebildet.

Damit der Sensor ohne Schrägstellung in den Sensorhalter einbaubar ist, klemmt der Haltebügel in seiner Schließstellung vorteilhafterweise den Sensor in Sensorachsrichtung ein.

In bevorzugter Ausgestaltung liegt der Sensor über eine elastische Dichtungsmasse oder einem elastischen Entkopplungsring am Sensorhalter an.

In spezieller Ausgestaltung ist die Dichtungsmasse oder der Entkopplungsring ein weicher Silikonkautschuk.

Vorteilhaft besteht der Sensorhalter aus Polypropylen (PP) und ist über Ultraschallschweißen mit dem Stoßfänger verbunden.

Nachfolgend wird die Erfindung an Hand verschiedener Ansichten eines erfindungsgemäßen Sensorhalters und an Hand von zwei Schnitten näher erläutert.

In den Figuren 1 a, 1b, 1 c und 1 d ist der Sensorhalter 3 von beiden Seiten in der Offenstellung - Figuren 1 a und 1 b - und in der Schließstellung - Figuren 1c und 1d - gezeigt.

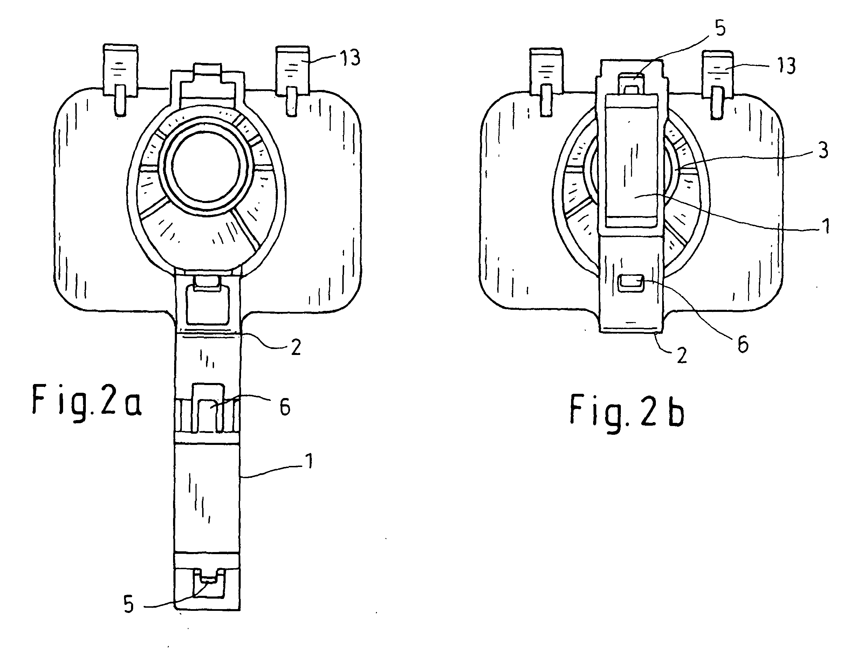

Die Figuren 2a und 2b zeigen den Sensorhalter 3 in einer weiteren Ansicht in der Offenstellung - Figur 2a - und in der Schließstellung - Figur 2 b.

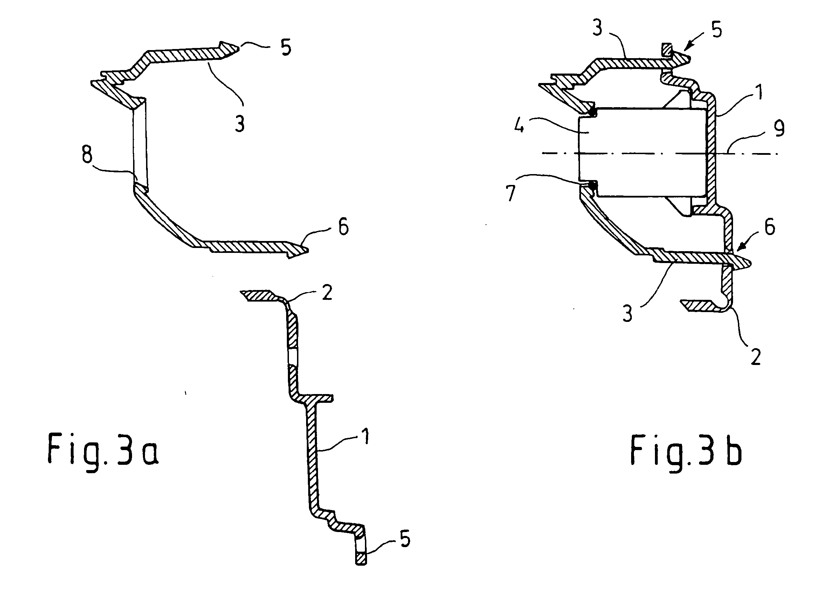

Figur 3b zeigt den Sensorhalter 3 mit eingesetztem Sensor 4 in einem Schnitt und Figur 3a denselben Sensorhalter 3 in der Offenstellung.

Der in den Figuren gezeigte Sensorhalter 3 besteht aus PP (Polypropylen), d. h. dem Material, aus dem in der Regel auch der Stoßfänger hergestellt ist.

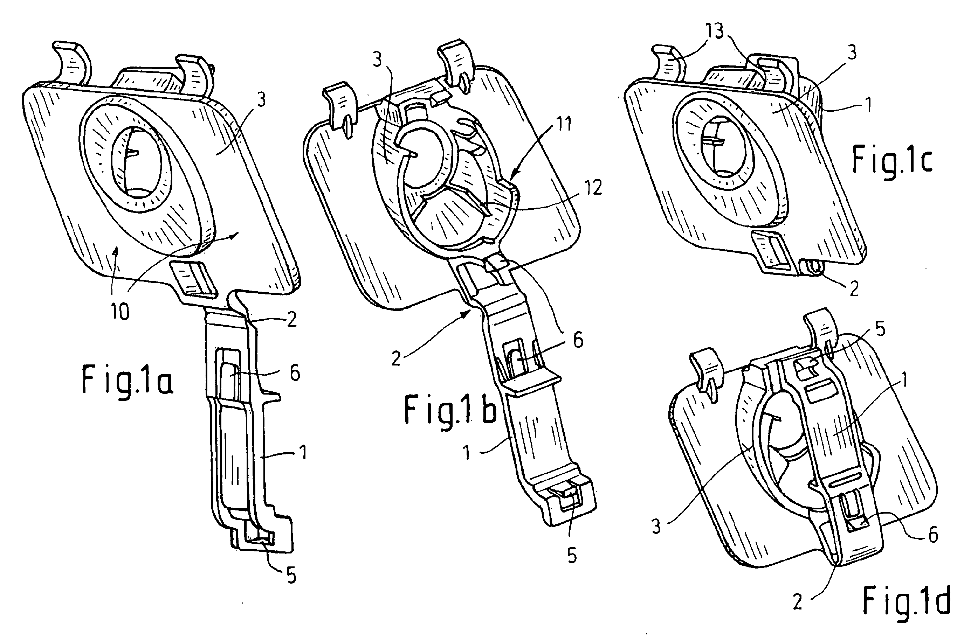

Nicht gezeigt ist, dass der Sensorhalter 3 mit dem Stoßfänger durch Ultraschallschweißen verbunden ist. Die Schweißfläche ist in Fig. 1 a mit dem Bezugszeichen 10 gekennzeichnet.

Der Sensor 4 wird erfindungsgemäß über einen stirnseitigen Haltebügel 1, der mittels eines Filmscharniers 2 am Sensorhalter 3 angebunden ist, im Sensorhalter 3 verankert. Nach Einlegen des Sensors 4 in den Sensorhalter 3 wird der Haltebügel 1, der über ein Filmscharnier 2 am Sensorhalter 3 befestigt ist, umgeklappt und an seinem dem Filmscharnier abgewandten Ende über eine Verrastung 5 am Sensorhalter 3 eingerastet. Zusätzlich kann vorteilhafterweise am Haltebügel 1 in der Nähe des Filmscharniers 2 eine weitere Verrastung 6 des Haltebügels 1 mit dem Sensorhalter 3 angeordnet sein. Hierdurch ist der Sensor 4 unverrückbar im Sensorhalter 3 eingeklemmt. Diese zusätzliche Verrastung 6 ist besonders vorteilhaft, wenn der Sensor 4 kopfseitig über eine/einen Dichtungsmasse oder Entkopplungsring 7 an der Öffnung 8 im Sensorhalter 3 anliegt. Diese Dichtungsmasse oder Entkopplungsring 7 ist bevorzugt ein weicher Silikonkautschuk.

Figur 1b zeigt beispielhaft noch eine vorteilhafte Verdrehsicherung 11 und eine Sensorführung 12 in Form von Stegen. Auch eine Kabelhalterung 13 ist noch am Sensorhalter 3 angebracht.

## Patentansprüche

1. Sensorhalter (3) an einem Stoßfänger eines Kraftfahrzeuges zur Aufnahme von Sensoren (4), **dadurch gekennzeichnet, dass** am Sensorhalter (3) ein klappbarer Haltebügel (1) befestigt ist, der von einer Offenstellung, in der der Sensor (4) in den Sensorhalter (3) einlegbar oder herausnehmbar ist, in eine Schließstellung geklappt werden kann und in der Schließstellung den Sensor (4) im Sensorhalter (3) einklemmt.

2. Sensorhalter nach Anspruch 1, **dadurch gekennzeichnet, dass** der Haltebügel (1) an einem Ende über ein Filmscharnier (2) am Sensorhalter (3) befestigt ist und an seinem anderen, dem Filmscharnier (2) abgewandten Ende in seiner Schließstellung über eine Verrastung (5) am Sensorhalter (3) einrastet.

3. Sensorhalter nach Anspruch 1 oder 2, **dadurch gekennzeichnet, dass** der Haltebügel (1) an seinem einen Ende zusätzlich zum Filmscharnier (2) über eine weitere Verrastung (6) mit dem Sensorhalter (3) in der Schließstellung einrastet.

4. Sensorhalter nach einem der Ansprüche 1 bis 3, **dadurch gekennzeichnet, dass** der Haltebügel (1) in seiner Schließstellung den Sensor (4) in Sensorachsrichtung (9) einklemmt.

5. Sensorhalter nach einem der Ansprüche 1 bis 4, **dadurch gekennzeichnet, dass** der Sensor (4) über eine elastische Dichtungsmasse oder einen elastischen Entkopplungsring (7) am Sensorhalter (3) anliegt.

6. Sensorhalter nach Anspruch 5, **dadurch gekennzeichnet, dass** die Dichtungsmasse oder der Entkopplungsring (7) ein weicher Silikonkautschuk ist.

7. Sensorhalter nach einem der Ansprüche 1 bis 6, **dadurch gekennzeichnet, dass** der Sensorhalter (3) über Ultraschallschweißen mit dem Stoßfänger verbunden ist.

8. Sensorhalter nach einem der Ansprüche 1 bis 7, **dadurch gekennzeichnet, dass** der Sensor (4) ein Abstandssensor ist.

9. Sensorhalter nach einem der Ansprüche 1 bis 8, **dadurch gekennzeichnet, dass** der Sensorhalter (3) aus Polypropylen besteht.

## Claims

1. A sensor holder (3) on a bumper of a motor vehicle for accommodating sensors (4), **characterised in that** secured to the sensor holder (3) there is a folding holding clip (1) which can be folded from an open position, in which the sensor (4) can be inserted into or removed from the sensor holder (3), into a closed position, and which in the closed position clamps the sensor (4) in the sensor holder (3).

2. A sensor holder according to claim 1, **characterised in that** the holding clip (1) is secured at one end to the sensor holder (3) by way of a film hinge (2) and at its other end that is remote from the film hinge (2) latches, in its closed position, on the sensor holder (3) by way of a latch (5).

3. A sensor holder according to claim 1 or 2, **characterised in that** the holding clip (1) at its one end latches with the sensor holder (3) in the closed position by way of a further latch (6) in addition to the film hinge (2).

4. A sensor holder according to one of claims 1 to 3, **characterised in that** the holding clip (1) in its closed position clamps the sensor (4) in the sensor's axial direction (9).

5. A sensor holder according to one of claims 1 to 4, **characterised in that** the sensor (4) rests against the sensor holder (3) by way of an elastic sealing compound or an elastic decoupling ring (7).

6. A sensor holder according to claim 5, **characterised in that** the sealing compound or the decoupling ring (7) is a soft silicone rubber.

7. A sensor holder according to one of claims 1 to 6, **characterised in that** the sensor holder (3) is connected to the bumper by way of ultrasonic welding.

8. A sensor holder according to one of claims 1 to 7, **characterised in that** the sensor (4) is a distance-sensor.

9. A sensor holder according to one of claims 1 to 8, **characterised in that** the sensor holder (3) is made of polypropylene.

## Revendications

1. Support de détecteur (3) sur un pare-chocs d'un véhicule automobile, destiné à recevoir des détecteurs (4), **caractérisé par le fait qu'**il est fixé au support de détecteur (3) un étrier de retenue (1) rabattable qui peut être amené d'une position d'ouverture, dans laquelle le détecteur (4) peut être placé dans le support (3) ou en être retiré, dans une position de fermeture dans laquelle il serre le détecteur (4) dans le support (3).

2. Support de détecteur selon la revendication 1, **caractérisé par le fait que** l'étrier de retenue (1) est fixé par une extrémité au support de détecteur (3), par l'intermédiaire d'une charnière-film (2), et, dans sa position de fermeture, s'enclenche avec son autre extrémité, opposée à la charnière-film (2), avec un élément d'encliquetage (5) dans le support de détecteur (3).

3. Support de détecteur selon la revendication 1 ou 2, **caractérisé par le fait que** l'étrier de retenue (1) s'enclenche en plus, à son extrémité portant la charnière-film (2), avec un élément d'encliquetage (6) supplémentaire dans le support de détecteur (3), lorsqu'il se trouve en position de fermeture.

4. Support de détecteur selon une des revendications 1 à 3, **caractérisé par le fait que** dans sa position de fermeture, l'étrier de retenue (1) serre le détecteur (4) dans le sens de l'axe (9) du détecteur.

5. Support de détecteur selon une des revendications 1 à 4, **caractérisé par le fait que** le détecteur (4) est appliqué contre le support de détecteur (3) par l'intermédiaire d'une masse d'étanchéité élastique ou d'un anneau de séparation (7) élastique.

6. Support de détecteur selon la revendication 5, **caractérisé par le fait que** la masse d'étanchéité ou l'anneau de séparation (7) est constitué(e) d'un caoutchouc de silicone souple.

7. Support de détecteur selon une des revendications 1 à 6, **caractérisé par le fait que** le support (3) est lié au pare-chocs par soudage par ultrasons.

8. Support de détecteur selon une des revendications 1 à 7, **caractérisé par le fait que** le détecteur (4) est un détecteur de proximité.

9. Support de détecteur selon une des revendications 1 à 8, **caractérisé par le fait que** le support de détecteur (3) est en polypropylène.
